# DEMANDE DE BREVET EUROPEEN

(11) **EP 1 498 397 A1**
(43) Date de publication de la demande: **19.01.2005**
(21) Numéro de dépôt: 03102196.7
(22) Date de dépôt: 16.07.2003
(51) Int. Cl.: C03C 17/36

(54) **Substrat revêtu à très faible facteur solaire**

(71) Demandeur: GLAVERBEL, 1170 Bruxelles (BE)
(72) Inventeur: La désignation de l'inventeur n'a pas encore été déposée
(74) Mandataire: Farmer, Guy

(57) **Abrégé**

La présente invention concerne des substrats revêtus a faible facteur solaire, en particulier des substrats transparents revêtus d'un empilement comportant une ou plusieurs couche(s) de métal et qui comporte, en partant du substrat, au moins :
i) une première couche de matière diélectrique,
ii) une première couche absorbante,
iii) une couche réfléchissante dans l'IR,
iv) une deuxième couche absorbante,
v) une dernière couche de matière diélectrique,
l'épaisseur et la nature des couches absorbantes étant choisies de manière telle que l'absorption lumineuse totale du substrat revêtu soit supérieure ou égale à 35% lorsque le substrat est un verre clair sodo-calcique de 6 mm.

De tels substrats revêtus sont utilisés par exemple en tant que vitrages de bâtiments ou de véhicules, dans des structures feuilletées et en tant que filtres optiques.

## Description

La présente invention concerne des substrats revêtus, en particulier des substrats transparents revêtus d'un empilement comportant une ou plusieurs couche(s) de métal.

De tels substrats revêtus sont utilisés par exemple en tant que vitrages de bâtiments ou de véhicules, dans des structures simples, doubles ou feuilletées et en tant que filtres optiques.

Il est souhaitable que les vitrages de bâtiments ou de véhicules, ne laissent pas passer une proportion trop importante de rayonnement solaire incident total afin de ne pas surchauffer l'intérieur du bâtiment ou de l'habitacle tout en offrant une transmission lumineuse (TL = pourcentage du flux lumineux incident - de l'Illuminant D65- transmis par un substrat) appropriée de manière à procurer un niveau d'éclairement suffisant à l'intérieur du bâtiment. La transmission du rayonnement solaire incident total peut être exprimée en terme de facteur solaire (FS = pourcentage du rayonnement énergétique incident qui est d'une part directement transmis par le substrat et d'autre part absorbé par celui-ci puis rayonné par sa face opposée à la source d'énergie). Ces exigences quelque peu conflictuelles traduisent la volonté d'obtenir un vitrage présentant une sélectivité (S) élevée, définie par le rapport de la transmission lumineuse au facteur solaire. Il est également souhaitable que les vitrages répondent à certains critères esthétiques en terme de réflexion lumineuse (RL = pourcentage du flux lumineux incident -de l'Illuminant D65-réfléchi par un substrat) et de couleur en réflexion.

L'absorption lumineuse (AL) est le pourcentage du flux lumineux incident (de l'Illuminant D65) absorbé par un substrat ; la somme de la TL + RL + AL étant égale à 100%.

La présente description utilise les définitions de la Commission Internationale de l'Eclairage ("CIE").

On connaît des substrats portant un revêtement à haute transmission lumineuse et faible facteur solaire. Les documents FR 2.641.271 et FR 2.641.272 de la Demanderesse décrivent un substrat de matière vitreuse portant un revêtement multi-couches qui comprend une couche réfléchissante d'argent prise en sandwich entre deux couches transparentes et non absorbantes, l'une inférieure et l'autre supérieure.

Le document FR 2.733.495 de la Demanderesse, décrit des empilements anti-solaires à base de deux couches d'argent séparées par des couches non absorbantes, en particulier des oxydes métalliques. Une fine couche métallique sacrificielle est déposée sur chacune des couches d'argent. Cette fine couche métallique a une fonction de barrière protégeant la couche d'argent de l'oxydation lors du dépôt de la couche d'oxyde métallique supérieure. Son épaisseur est ajustée de manière à ce que lors du dépôt de la couche supérieure, elle s'oxyde suffisamment pour permettre une transmission lumineuse maximum. Dans FR 2.733.495, l'empilement garde une haute transmission lumineuse de l'ordre de 76% sur un substrat en verre clair simple de 6 mm et une faible absorption. Le facteur solaire est de l'ordre de 43% lorsque le substrat est une feuille simple de verre clair de 6 mm et de l'ordre de 37% pour un double vitrage.

Il pourrait être envisagé pour diminuer encore le facteur solaire du vitrage d'augmenter l'épaisseur de la/des couche(s) métallique(s) de l'empilement ou d'augmenter le nombre de couches métalliques. Cependant, ceci a l'inconvénient d'augmenter la réflexion lumineuse (RL) et de donner au vitrage des couleurs en réflexion généralement considérées inesthétiques.

On connaît également des barrières métalliques plus épaisses ayant pour fonction une protection pendant un traitement thermique ultérieur. Ces couches barrières ne restent pas métalliques mais s'oxydent pendant le traitement thermique et ne sont plus absorbantes.

Il existe également des empilages anti-solaires comportant des couches absorbantes. Cependant, il n'est pas évident d'ajouter une couche absorbante sans faire chuter la transmission lumineuse. Il est donc particulièrement difficile de maintenir une sélectivité importante.

EP 185 314 décrit un empilage comportant une couche absorbante, une couche d'argent et une fine couche d'acier inoxydable. La réflexion lumineuse dans ce cas est très élevée (jusqu'à 67%) et la TL n'est plus que de 12%. Ces caractéristiques ne répondent pas aux critères recherchés.

Des empilages du type Si₃N₄ / NiCr / Ag / NiCr / Si₃N₄ sont décrits dans US 5,800,933. Les couches non absorbantes de Si₃N₄ peuvent être dopées avec de l'acier inoxydable. Les couches de nickel-chrome ont des épaisseurs de l'ordre de 0.7 à 0.8 nm. Ces empilages sont adaptés pour obtenir une transmission lumineuse supérieure à 70% et une faible émissivité. L'absorption totale d'un tel empilage sur un verre clair est très faible (de l'ordre de 14% en double vitrage, TL=70%, RL= 16%).

WO 02/48065 décrit des empilages à double couches d'argent, comportant une couche absorbante insérée directement entre deux couches de diélectriques. Cette couche absorbante doit être placée soit entre les deux couches d'argent, « dans » le diélectrique intermédiaire, soit « dans » le diélectrique supérieur. Le facteur solaire atteint est de 26 à 31% en double vitrage. Le but de ces empilages est de conserver de bonnes propriétés optiques après trempe.

EP 1 032 543 décrit un empilage anti-solaire comportant une couche non absorbante, une première couche réfléchissant les IR, une barrière sacrificielle, une deuxième couche non absorbante, une deuxième couche réfléchissant les IR, une seconde barrière sacrificielle, et une dernière couche non absorbante. Une couche absorbante est ajoutée sous l'une ou l'autre des couches réfléchissant les IR. De tels empilages présentent un facteur solaire de l'ordre de 31% (en double vitrage).

Il existe cependant un besoin de fournir des substrats revêtus dont le facteur solaire est encore plus faible et dont les autres caractéristiques optiques restent bonnes : faible réflexion du coté revêtu et du côté non revêtu, sélectivité élevée, couleur en réflexion esthétiquement plaisante, etc.

On a découvert que la combinaison requise des propriétés optiques peut être réalisée, et d'autres avantages peuvent être obtenus par un substrat revêtu de différentes couches, selon la revendication 1 de la présente invention.

La présente invention a en particulier pour objet un substrat revêtu d'un empilement de couches, comportant successivement en partant du substrat, au moins :
i) une couche de matière diélectrique,
ii) une couche absorbante,
iii) une couche réfléchissante dans l'IR,
iv) une couche absorbante,
v) une couche de matière diélectrique,
l'épaisseur et la nature des couches absorbantes étant choisies de manière telle que l'empilement donnerait à un verre clair sodo-calcique de 6 mm d'épaisseur, une absorption lumineuse supérieure ou égale à 35%, de manière préférée supérieure à 37% et de manière encore préférée supérieure à 39%,.

Par substrat, il faut entendre tous substrats transparents généralement en matière vitreuse, qu'ils soient clairs ou colorés : verre, vitrocéramique, verre organique, polycarbonate, PET, polymères transparents divers; en particulier du verre sodo-calcique.

D'une manière particulièrement avantageuse, l'empilement comporte au moins deux couches réfléchissantes dans l'IR, disposées selon la séquence suivante, en partant du substrat :
une première couche de matière diélectrique,
une première couche absorbante,
une première couche réfléchissante dans l'IR,
une couche intermédiaire,
une dernière couche réfléchissante dans l'IR,
une dernière couche absorbante,
une dernière couche de matière diélectrique.

Il pourrait aussi être envisagé de déposer plus de deux couches réfléchissantes dans l'IR. Dans ce cas, il faut au moins une première couche absorbante déposée entre la première couche de matière diélectrique et la première couche réfléchissante et au moins une deuxième couche absorbante déposée entre la dernière couche réfléchissante et la dernière couche de matière diélectrique. Chaque couche réfléchissante étant séparée de la suivante par une couche intermédiaire, en particulier une couche de matière diélectrique, et/ou éventuellement une couche barrière. De la sorte, toutes les couches réfléchissantes sont prises en sandwich entre les 2 couches absorbantes. Dans la succession de couches ci-dessus, c'est donc la couche intermédiaire qui peut être remplacée par une alternance de couches intermédiaire / réfléchissante /intermédiaire.

Il peut aussi être envisagé de déposer plus de deux couches absorbantes. Il n'est donc pas exclu de déposer une ou plusieurs couches absorbantes entre deux couches de matières réfléchissantes dans l'IR.

L'épaisseur totale de la ou des couches réfléchissantes dans l'IR est généralement supérieure à 10 nm, de préférence comprise entre 13 et 40 nm, de manière encore préférée entre 18 et 35 nm. Dans le cas particulier où l'empilement comporte deux couches d'argent, l'épaisseur totale des deux couches est de préférence supérieure à 25nm, de manière encore préférée supérieure à 27 nm.

En particulier, l'empilement selon l'invention comporte une couche sacrificielle disposée entre une couche réfléchissante dans l'IR et la couche de diélectrique subséquente.

Selon un mode de réalisation préféré de l'invention, l'empilement consiste essentiellement en la succession de couches suivantes, en partant du substrat :
a) une couche de matière diélectrique,
b) une couche absorbante,
c) une couche réfléchissante dans l'IR,
d) une barrière sacrificielle,
e) une couche de matière diélectrique,
f) une couche réfléchissante dans l'IR,
g) une couche absorbante ayant également une fonction de barrière,
h) une couche de matière diélectrique.

Les matières diélectriques des couches peuvent être choisies parmi les oxydes, les nitrures, les oxynitrures métalliques, par exemple, l'alumine (Al₂O₃), le nitrure d'aluminium (AlN), l'oxynitrure d'aluminium (AlNO), la magnésie (MgO), l'oxyde de niobium (Nb₂O₅), la silice (SiO₂), le nitrure de silicium (Si₃N₄), le dioxyde de titane (TiO₂), l'oxyde de bismuth (Bi₂O₅), l'oxyde d'yttrium (Y₂O₃), l'oxyde d'étain (SnO₂), l'oxyde de tantale (TaO₂), l'oxyde de zinc (ZnO), l'oxyde de zirconium (ZrO₂), le stannate de zinc (ZnSn₂O₄) ou parmi des sulfures comme le sulfure de zinc (ZnS). Généralement, ces composés ont un indice d'absorption spectral k, sur l'ensemble du spectre visible, inférieur à 0.1. Ces composés peuvent être utilisés seuls ou en combinaison. Ils constituent des matières transparentes non absorbantes permettant d'ajuster la réflexion lumineuse RL et de neutraliser les couleurs en réflexion par des effets d'interférence optique. Une couche de diélectrique peut comporter deux ou plusieurs couches de matière différente.

Les matières des couches absorbantes sont choisies parmi les matières possédant un indice d'absorption spectral, à la longueur d'onde de 580nm (k₅₈₀), supérieur à 0.8, en particulier supérieur à 1, de manière encore préférée supérieur à 1.2. De telles matières sont, par exemple, des métaux comme le titane, le zirconium, l'acier inoxydable, le niobium, le zinc, le chrome, le nickel, et les alliages de ces métaux, ou des nitrures comme le nitrure de titane, de zirconium.

Les matières des couches réfléchissantes dans l'IR comprennent généralement de l'argent ou des alliages d'argent avec d'autres métaux tels que le platine ou le palladium.

Lorsque le substrat est une feuille de verre clair sodo-calcique de 6 mm d'épaisseur, la transmission lumineuse du substrat revêtu est de préférence supérieure à 25 % de manière encore préférée supérieure à 30% et est de préférence inférieure à 60%, de préférence inférieure à 55%, de manière encore préférée inférieure à 50% ; la réflexion lumineuse, tant côté couche (RLc) que côté substrat (RLv), du substrat revêtu, est de préférence inférieure à 28 %, de manière encore préférée inférieure à 23%, et de manière encore plus préférée inférieure à 20% et est généralement supérieure à 8%, de manière particulière supérieure à 10%. Bien entendu, les valeurs de RL côté couche ou côté substrat ne sont pas nécessairement identiques.

De manière préférée, le substrat revêtu selon l'invention présente une couleur en réflexion esthétiquement agréable c'est-à-dire qui n'est ni rose, ni jaune mais neutre ou bleutée ou turquoise. En particulier, la couleur en réflexion, côté verre, présente un indice colorimétrique a* compris entre 0 et -10, de préférence compris entre -1 et -8 et un indice colorimétrique b* compris entre 0 et -20, de préférence compris entre -1 et -15, de manière encore préférée entre -2 et -10. Et de préférence, b* est inférieur à a*.

Les substrats revêtus selon l'invention peuvent être incorporés notamment dans des vitrages simples ou multiples de bâtiments, spécialement des doubles vitrages, mais également dans des vitrages feuilletés, et pour applications automobiles comme toits de véhicules, vitres latérales arrières ou lunettes arrières.

Dans un double vitrage, le revêtement anti-solaire selon l'invention pourra être déposé en position 2 ou éventuellement en position 3, les faces de chacune des deux feuilles de verre étant numérotées de l'extérieure vers l'intérieure.

Avantageusement, le facteur solaire d'un vitrage double (feuille de 6mm- espace de 15mm - feuille de 6mm) est inférieur à 35%, de préférence inférieur à 30%, de manière encore préférée inférieur à 26%. La sélectivité du vitrage double (TUFS) est de préférence supérieure à 1.3, de préférence supérieure à 1.5.

Le vitrage selon l'invention présente avantageusement une couleur en réflexion, côté extérieur, dont l'indice colorimétrique a* est compris entre 0 et -10, de préférence compris entre -1 et -8 et l'indice colorimétrique b* est compris entre 0 et -20, de préférence compris entre -1 et -15, de manière encore préférée entre -1 et - 10.

En outre, le vitrage selon l'invention présente une stabilité angulaire telle que, lorsque l'angle d'incidence varie de 60°, la variation des indices colorimétriques a* et b* est inférieure à 4, de manière préférée inférieure à 3, de manière encore préférée inférieure à 2.

La présente invention est décrite plus en détail, de manière non limitative, dans les exemples ci-dessous.

### Exemples :

Chacun des exemples correspond à un produit réalisé à partir d'une feuille de substrat de verre clair sodo-calcique de 6 mm d'épaisseur qui est introduite dans un dispositif de dépôt de couches en ligne comprenant des enceintes successives de dépôt sous vide (à une pression d'environ 0.3 Pa) contenant des cathodes de pulvérisation assistée par magnétron.

### Exemple 1:

L'empilement de couches successives suivant est réalisé :
o une première couche diélectrique d'oxyde de zinc ayant une épaisseur de 39 nm est déposée par pulvérisation d'une cible de zinc métallique dans une atmosphère réactive d'oxygène.
o une première couche absorbante de titane d'une épaisseur de 4.5 nm est déposée par pulvérisation d'une cible de titane métallique dans une atmosphère inerte d'argon.
o une première couche d'argent de 17 nm d'épaisseur est déposée par pulvérisation d'une cible d'argent métallique dans une atmosphère inerte d'argon.
o une couche barrière de titane de 2 nm est déposée par pulvérisation d'une cible de titane dans une atmosphère inerte d'argon. Cette couche va en réalité s'oxyder lors du dépôt de la couche suivante sur la majeure partie de son épaisseur. Il est a noter qu'une fois oxydée, la couche présente une épaisseur supérieure à l'épaisseur qu'elle présentait lorsqu'elle était dans un état métallique.
o une seconde couche diélectrique d'oxyde de zinc de 84 nm d'épaisseur est déposée par pulvérisation d'une cible de zinc métallique dans une atmosphère réactive d'oxygène.
o une seconde couche d'argent de 14 nm d'épaisseur est déposée par pulvérisation d'une cible d'argent métallique dans une atmosphère inerte d'argon.
o une seconde couche absorbante de titane de 4 nm est déposée par pulvérisation d'une cible métallique en atmosphère inerte. Cette couche a une double fonction : elle constitue une barrière sacrificielle de protection de la couche d'argent en évitant tout contact de la couche d'argent avec l'atmosphère réactive de la couche suivante mais elle est suffisamment épaisse pour qu'une partie substantielle de son épaisseur reste métallique. Sur les 4 nm d'épaisseur déposé, il est estimé que la moitié du titane déposé va s'oxyder et que 2 nm d'épaisseur restent métalliques. Dans l'empilement complet, on retrouvera dès lors 2 nm de Ti métallique et environ 4 nm de TiO₂.
o une troisième couche diélectrique d'oxyde de zinc de 28 nm est déposée par pulvérisation d'une cible de zinc métallique dans une atmosphère réactive d'oxygène.

Les propriétés optiques du substrat revêtu de cet empilement sont rassemblées dans le tableau II ci-dessous.

### Exemples 2 à 14 :

Les empilages des exemples 2 à 14 sont déposés selon le même mode opératoire qu'à l'exemple 1. Le tableau I ci-dessous reprend la nature et l'épaisseur des différentes couches déposées dans chacun des exemples. Les épaisseurs sont données en nm et sont les épaisseurs des couches telles que déposées avant une éventuelle oxydation.

**Tableau I :**

| | i) | ii) | iii) | iv) | v) | vi) | vii) | viii) | ix) | x) |
|---|---|---|---|---|---|---|---|---|---|---|
| Ex. 1 | ZnO | Ti | Ag | Ti | ZnO | x | Ag | Ti | | ZnO |
| (nm) | 39 | 4,5 | 17 | 2 | 84 | | 14 | 4 | | 28 |
| Ex.2 | ZnO | Ti | Ag | Ti | ZnO | x | Ag | Ti | | ZnO |
| (nm) | 35 | 5 | 17 | 2 | 80 | | 17 | 5,5 | | 25 |
| Ex. 3 | SnO2 | Ti | Ag | Ti | SnO2 | x | Ag | Zn | | SnO2 |
| (nm) | 39 | 4,5 | 17 | 2 | 84 | | 14 | 3 | | 29 |
| Ex. 4 | TiO₂/ZnO | Ti | Ag | Ti | ZnO | x | Ag | Ti | | ZnO |
| (nm) | 20/9 | 4,5 | 17 | 2 | 88 | | 14,8 | 4 | | 30 |
| Ex. 5 | ZnO | Zr | Ag | Ti | ZnO | x | Ag | Ti | | ZnO |
| (nm) | 35 | 4,5 | 17 | 2 | 84 | | 14 | 4 | | 28 |
| Ex. 6 | ZnO | ZrN | Ag | Ti | ZnO | x | Ag | Ti | | ZnO |
| (nm) | 38 | 12 | 17 | 2 | 84 | | 15 | 4 | | 28 |
| Ex. 7 | ZnO | SS | Ag | Ti | ZnO | x | Ag | Ti | | ZnO |
| (nm) | 38 | 4,5 | 17 | 2 | 88 | | 15 | 4 | | 32 |
| Ex. 8 | ZnO | SS | Ag | Ti | ZnO | x | Ag | Ti | | ZnO |
| (nm) | 45 | 6,5 | 16,5 | 2 | 88 | | 16 | 4 | | 33 |
| Ex. 9 | ZnO | SS | Ag | Ti | ZnO | x | Ag | Ti | | ZnO |
| (nm) | 38 | 6 | 17,5 | 2 | 80 | | 14 | 4 | | 28 |
| Ex. 10 | ZnO | Nb | Ag | Ti | ZnO | x | Ag | Nb | Ti | ZnO |
| (nm) | 35 | 4,5 | 17 | 2 | 84 | | 15,5 | 3 | 2 | 28 |
| Ex. 11 | Si₃N₄/ZnO | Ti | Ag | Ti | Si₃N₄/ZnO | x | Ag | Ti | | Si₃N₄ |
| (nm) | 25/6,5 | 4 | 17 | 2 | 84/6,5 | | 14 | 4 | | 31 |
| Ex. 12 | Si3N4 | Ti | Ag | Ti | Si₃N₄ | x | Ag | Ti | | Si₃N₄ |
| (nm) | 29 | 4 | 17 | 2 | 88 | | 14 | 4 | | 31 |
| Ex. 13 | Si3N4 | Ti | Ag | Ti | Si₃N₄ | x | Ag | Ti | | Si₃N₄ |
| (nm) | 29 | 4 | 17 | 2 | 84 | | 17 | 4 | | 31 |
| Ex. 14 | Si3N4 | Ti | Ag | Ti | Si₃N₄ | Ti | Ag | Ti | | Si₃N₄ |
| (nm) | 31 | 4 | 18,5 | 2 | 84 | 2 | 16 | 4 | | 23 |

Les propriétés optiques, de chacun des substrats revêtus sont rassemblées dans le tableau II ci-dessous.

**Tableau II :**

| | Simple vitrage | | | | | | double vitrage | | |
|---|---|---|---|---|---|---|---|---|---|
| | **TL** | **RLv** | **a*** | **b*** | **RLc** | **Alv** | **TL** | **FS** | **S** |
| | % | % | | | % | % | % | % | |
| Ex.1 | 42,4 | 13,7 | -0,9 | -5,6 | 18,5 | 43,9 | 38,1 | 24,2 | 1,57 |
| Ex.2 | 36,0 | 12,0 | -2,3 | -18,1 | 13,1 | 52,0 | 32,3 | 18,2 | 1,78 |
| Ex.3 | 40,1 | 13,5 | -1,5 | -5,2 | 12,6 | 46,4 | 36,0 | 23,4 | 1,54 |
| Ex.4 | 44,2 | 12,8 | -1,3 | -4,1 | 18,2 | 43,0 | 39,7 | 25,1 | 1,58 |
| Ex.5 | 45,9 | 14,3 | -0,7 | -8,9 | 19,6 | 39,8 | 41,2 | 26,1 | 1,58 |
| Ex.6 | 45,6 | 17,8 | 0,1 | -7,3 | 23,7 | 36,6 | 40,9 | 23,7 | 1,73 |
| Ex.7 | 40,2 | 11,8 | -1,1 | -3,7 | 14,0 | 48,0 | 36,1 | 22,5 | 1,60 |
| Ex.8 | 35,1 | 12,0 | -1,7 | -3,3 | 14,4 | 52,9 | 31,5 | 18,7 | 1,68 |
| Ex.9 | 35,0 | 12,5 | -1,1 | -6,9 | 15,9 | 52,5 | 31,4 | 20,5 | 1,53 |
| Ex.10 | 40,1 | 11,9 | -3,5 | -11,2 | 17,3 | 48,0 | 36,0 | 23,0 | 1,57 |
| Ex.11 | 41,4 | 16,6 | -2,1 | -5 | 18,2 | 42,0 | 37,2 | 25,9 | 1,43 |
| Ex.12 | 41,1 | 16,4 | -1,3 | -5,6 | 16,3 | 42,5 | 36,9 | 25,5 | 1,45 |
| Ex.13 | 42,3 | 13,7 | -0,7 | -15,3 | 9,4 | 44,0 | 38,0 | 23,8 | 1,60 |
| Ex.14 | 31,3 | 14,5 | -1,5 | -11,6 | 16,4 | 54,2 | 28,1 | 17,8 | 1,58 |

## Revendications

1. Substrat transparent revêtu d'un empilement de couches, comportant successivement en partant du substrat, au moins :
a) une première couche de matière diélectrique,
b) une première couche absorbante,
c) une couche réfléchissante dans l'IR,
d) une deuxième couche absorbante,
e) une dernière couche de matière diélectrique,
l'épaisseur et la nature des couches absorbantes étant choisies de manière telle l'empilement de couches donnerait à un verre clair sodo-calcique de 6 mm, une absorption lumineuse supérieure ou égale à 35%, de préférence supérieure à 37%, de manière encore préférée supérieur à 39

2. Substrat selon l'une quelconque des revendications précédentes, **caractérisé en ce qu'**il comporte au moins deux couches réfléchissantes dans l'IR, disposées dans l'empilement selon la séquence suivante, en partant du substrat :
a) une première couche de matière diélectrique,
b) une première couche absorbante,
c) une première couche réfléchissante dans l'IR,
d) une couche intermédiaire,
e) une dernière couche réfléchissante dans l'IR,
f) une dernière couche absorbante,
g) une dernière couche de matière diélectrique.

3. Substrat selon la revendication précédente, **caractérisé en ce que** la couche intermédiaire comporte une couche réfléchissante dans l'IR, prise en sandwich par des couches de matière diélectrique.

4. Substrat selon la revendication 3, **caractérisé en ce que** la couche intermédiaire comporte plusieurs couches réfléchissantes dans l'IR, prises en sandwich par des couches de matière diélectrique et séparées par des couches de matière diélectrique.

5. Substrat selon l'une quelconque des revendications précédentes, **caractérisé en ce qu'**il comporte au moins une couche sacrificielle disposée entre une couche réfléchissante dans l'IR et une couche de matière diélectrique subséquente.

6. Substrat selon l'une quelconque des revendications précédentes, **caractérisé en ce que** la matière des couches diélectriques comprend un ou plusieurs composé(s) choisis parmi l'alumine (Al₂O₃), le nitrure d'aluminium (AlN), l'oxynitrure d'aluminium (AlNO), la magnésie (MgO), l'oxyde de niobium (Nb₂O₅), la silice (SiO₂), le nitrure de silicium (Si₃N₄) le dioxyde de titane (TiO₂), l'oxyde de bismuth (Bi₂O₅), l'oxyde d'yttrium (Y₂O₃), l'oxyde d'étain (SnO₂), l'oxyde de tantale (TaO₂), l'oxyde de zinc (ZnO), l'oxyde de zirconium (ZrO₂), le stannate de zinc (ZnSn₂O₄) ou le sulfure de zinc (ZnS).

7. Substrat selon l'une quelconque des revendications précédentes, **caractérisé en ce que** la ou les couches réfléchissantes dans l'IR comporte(nt) de l'argent ou un alliage d'argent avec d'autres métaux.

8. Substrat selon l'une quelconque des revendications précédentes, **caractérisé en ce que** la matière des couches absorbantes est choisie parmi les matières possédant un indice d'absorption spectrale, à la longueur d'onde de 580 nm (k₅₈₀), supérieur à 0.8, en particulier supérieur à 1, de manière encore préférée supérieure à 1.2.

9. Substrat selon l'une quelconque des revendications précédentes, **caractérisé en ce que** la matière des couches absorbantes est choisie parmi les métaux tel que le titane, le zirconium, l'acier inoxydable, le niobium, le zinc, le chrome, le nickel, et les alliages de ces métaux ou parmi les nitrures de métaux comme le nitrure de titane ou de zirconium.

10. Substrat selon l'une quelconque des revendications précédentes, **caractérisé en ce que** la transmission lumineuse du substrat revêtu est comprise entre 25 et 60%, de préférence entre 30 et 55%, lorsque le substrat est un verre clair sodo-calcique de 6 mm.

11. Substrat selon l'une quelconque des revendications précédentes, **caractérisé en ce que** la réflexion lumineuse, côté couche (RLc), du substrat revêtu, est inférieure à 28 %, de préférence est comprise entre 8 et 25%, de manière encore préférée entre 10 et 20%.

12. Substrat selon l'une quelconque des revendications précédentes, **caractérisé en ce que** la réflexion lumineuse, côté substrat (RLv), du substrat revêtu, est inférieure à 28 %, de préférence est comprise entre 8 et 23%, de manière encore préférée entre 10 et 18%.

13. Substrat selon l'une quelconque des revendications précédentes, **caractérisé en ce que** l'épaisseur totale de la ou des couches réfléchissantes dans l'IR est supérieure à 10 nm, de préférence comprise entre 13 et 40 nm, de manière encore préférée entre 18 et 35 nm.

14. Substrat selon l'une quelconque des revendications précédentes, **caractérisé en ce que** la couleur en réflexion, côté verre, présente un indice colorimétrique a* compris entre 0 et -10, de préférence compris entre -1 et -8 et un indice colorimétrique b* compris entre 0 et -20, de préférence compris entre -1 et - 15, de manière encore préférée entre -1 et -10.

15. Vitrage comportant un substrat revêtu selon l'une quelconque des revendications précédentes, **caractérisé en ce qu'**il présente un facteur solaire inférieur à 35%, de préférence inférieur à 30%, de manière encore préférée inférieur à 26%.

16. Vitrage selon la revendication précédente, **caractérisé en ce que** la sélectivité (TL/FS) est supérieure à 1.3, de préférence supérieure à 1.5.

17. Vitrage selon l'une quelconque des revendications 15 et 16, **caractérisé en ce que** la couleur en réflexion, côté extérieur, présente un indice colorimétrique a* compris entre 0 et -10, de préférence compris entre -1 et -8 et un indice colorimétrique b* compris entre 0 et -20, de préférence compris entre -1 et - 15, de manière encore préférée entre -1 et -10.
